# EUROPÄISCHE PATENTSCHRIFT

(11) **EP 0 663 988 B1**
(45) Veröffentlichungstag und Bekanntmachung des Hinweises auf die Patenterteilung: **10.09.1997**
(21) Anmeldenummer: 93921918.4
(22) Anmeldetag: 05.10.1993
(51) Int. Cl.: F16J 15/32

(54) **WELLENDICHTRING MIT EINER DICHTLIPPE**
A SHAFT SEALING RING WITH A SEALING LIP
BAGUE A LEVRE D'ETANCHEITE POUR ARBRE

(30) Priorität: 05.10.1992 DE 9213373 U
(43) Veröffentlichungstag der Anmeldung: 26.07.1995
(73) Patentinhaber: Merkel Dichtelemente GmbH, 21107 Hamburg (DE)
(72) Erfinder: BRANDT, Hans-Jürgen, D-21109 Hamburg (DE)
(74) Vertreter: Glawe, Delfs, Moll & Partner
(86) Internationale Anmeldenummer: EP9302720
(87) Internationale Veröffentlichungsnummer: WO9408160

(56) Entgegenhaltungen:
- EP-A- 0 133 928
- EP-A- 0 213 998
- EP-A- 0 284 496
- GB-A- 1 183 418

## Beschreibung

Die Erfindung bezieht sich auf einen Wellendichtring, der einen ringförmigen Haltekörper und einen ringförmigen Dichtteil umfaßt, der sich zusammensetzt aus einer sich entgegen der abzudichtenden Druckdifferenz zur Wellenoberfläche erstreckenden Dichtlippe und einem etwa radial sich erstrekkenden, die Dichtlippe mit dem Haltekörper verbindenden Verbindungsabschnitt. Bei einer bekannten Dichtung dieser Art (EP-A 0 133 928) ist der Verbindungsabschnitt nicht steifer als die Dichtlippe ausgeführt, um leicht biegbar zu sein. Dadurch wird erreicht, daß der Dichtteil als radiale Scheibe geformt werden kann und den typischen schrägen Lippenverlauf entgegen der abzusichtenden Druckdifferenz erst durch Verformung beim Einbau annimmt. Es ist nicht bekannt, wie der bekannte Dichtring sich unter Druckdifferenz verformt. Anzunehmen ist, daß die Dichtlippe, die mit der Wellenoberfläche einen spitzen Winkel einschließt, unter der abzusichtenden Druckdifferenz eine Biegung erleidet, die zu einer Verringerung des genannten Winkels tendiert. Ferner ist anzunehmen, daß der Dichtteil einschließlich des Verbindungsabschnitts unter der abzudichtenden Druckdifferenz eine axiale Verformung in Richtung zur Niederdruckseite hin erleidet. Da sich dadurch der Verlauf des Verbindungsabschnitts noch stärker der Radialrichtung zuneigt, tendiert auch diese Verformung dazu, dem genannten Winkel zwischen der Dichtlippe und der Wellenoberfläche zu verringern. Im Ergebnis ist daher festzustellen, daß die bekannte Dichtung über den abzudichtenden Druckbereich hinweg eine Verringerung des Winkels erleidet, unter dem sie an der Wellenoberfläche anliegt. Dadurch werden die Dichtverhältnisse in nachteiliger Weise geändert. Dies ist besonders ungünstig bei solchem Material, das wie Polytetrafluorethylen zu sogenanntem kaltem Fluß neigt. Darunter versteht man, daß das Material unter langdauernder Krafteinwirkung einer fortschreitenden bleibenden Verformung unterliegt. Bei der bekannten Dichtung führt die Verringerung des Winkels zwischen Dichtlippe und Wellenoberfläche, insbesondere unter der Einwirkung des kalten Flusses, zu einer nachteiligen Vergrößerung der Fläche, mit der die Lippe an der Wellenoberfläche anliegt. Wenn die Dichtlippe mit einer vorbestimmten Querschnittsgeometrie zur Bildung einer vorbestimmten-Anlagefläche ausgestattet ist, so geht diese Geometrie durch die Verformung verloren. Dabei steigt die Dichtpressung an, der Dichtspalt wird geringer und die darin erzeugte Wärmeleistung steigt an, was zur Gefährdung der Dichtlippe führen kann, da sie in der Regel wegen der geforderten Nachgiebigkeit oder Elastizität aus einem Werkstoff besteht, der gegen hohe Temperaturen empfindlich ist. Ferner kann der Verlust der vorbestimmten Querschnittsgeometrie zur Folge haben, daß die Dichtlippe an der Gegendichtfläche nicht mit der an ihr für diesen Zweck mit bestimmter Geometrie vorgebildeten Ringfläche, sondern nur noch mit einer Kante dieser Dichtfläche an der Gegendichtfläche anliegt, was zu erhöhter Reibbeanspruchung und Beschädigung der Gegenddichtfläche führen kann.

Diese Nachteile werden erfindungsgemäß durch die Merkmale des Anspruchs 1, vorzugsweise auch die Merkmale der Unteransprüche, vermindert oder beseitigt.

Die Wirkungsweise der Erfindungsmerkmale beruht darauf, daß sich die Lippe und der Verbindungsabschnitt unter der Druckdifferenz gegensinnig verformen. Bei dem Verbindungsabschnitt zeichnet sich diese Verformung dadurch aus, daß wenigstens ein Teil des Verbindungsabschnitts zur Niederdruckseite über die Radialebene hinaus verformt wird, oder anderes ausgedrückt, daß ein radial weiter innenliegender Teil des Verbindungsabschnitts eine näher zur Niederdruckseite hin liegende Position einnimmt als ein radial weiter außenliegender Teil des Verbindungsabschnitts. Diese Verformung wirkt in solcher Weise, daß der radial innere Bereich des Verbindungsabschnittssich nicht nur axial, sondern auch ein wenig radial nach außen verlagert. Das bedeutet, daß das mit diesem verbundene Ende der Lippe von der Gegendichtfläche wegbewegt wird. Dadurch wird der zur Gegendichtfläche hin gerichteten Verformungsbewegungder Lippe entgegengewirkt. Dies ergibt nicht nur eine Entlastung der Dichtfläche von der durch die Druckdifferenz auf die Lippe ausgeübten Kraft, sondern wirkt auch der Kippung der Lippenspitze entgegen.

Bei idealer Bemessung kann man auf diese Weise erreichen, daß die Dichtpressung der Dichtlippe ebenso wie die Anlagegeometrie konstant bleiben. Diese Wirkung wird dann am leichtesten erreicht, wenn der Verbindungsabschnitt eine Mindestlänge im Verhältnis zur axialen Lippenlänge hat, die mindestens 40%, vorzugsweise mindestens 50%, weiter vorzugsweise höchstens 80% und vorzugsweise höchstens 100% beträgt.

Eine Abweichung des Verbindungsabschnitts oder eines wesentlichen Teils desselben von der Radialrichtung im Sinne der Schrägungsrichtung der Lippe ist unerwünscht, weil dies dazu führt, daß die erfindungsgemäße Funktion erst dann eintritt, wenn unter höherer Druckdifferenz der Verbindungsabschnitt sich über die Radialrichtung hinaus zur Niederdruckseite hin verformt, während die bei niedriger Druckdifferenz, wenn die axiale Verformung des Verbindungsabschnitts noch gering ist, die erfindungsgemäße Funktion noch nicht stattfindet. Jedoch gibt es Fälle, in denen dies geduldet werden kann, weil bei geringen abzudichtenden Druckdifferenzen die eingangs erwähnten schädlichen Wirkungen noch nicht so ausgeprägt sind. Es kommt darauf an, daß bei denjenigen vorbestimmten Druckdifferenzen, bei denen anderenfalls die zu vermeidende Nachteile eintreten könnten, die erfindungsgemäße Verformung des Verbindungsabschnitts zustandekommt.

Der Erfindungsgedanke eignet sich vornehmlich für solche Lippenwerkstoffe, die vergleichsweise steif sind, wie beispielsweise Polytetrafluorethylen in reiner oder durch zusatzstoffe modifizierter Form sowie anderer Polyfluorkohlenstoffe. Die Erfindung hat auch den Vorteil, daß die Kaltflußeigenschaften dieser Werkstoffe sich nicht oder weniger auswirken, weil diese an das Auftreten einer unerwünschten Verformung geknüpft sind, die aber dank der Erfindung in nur geringerem Maße auftritt.

Da im Zusammenhang der Erfindung die Durchbiegung der Lippe unerwünscht, die Verformung des Verbindungsabschnitts aber erwünscht ist, ist es zweckmäßig, wenn der Verbindungsabschnitt weniger steif als die Lippe ist, indem er beispielsweise in seiner Gesamtheit dünner als die Lippe ausgebildet ist oder ein (unbestimmter Artikel) Biegegelenk (ggf. in Mehrzahl) enthält. Der Biegewiderstand des Verbindungsabschnitts ist zweckmäßigerweise höchstens halb so groß wie der mittlere Biegewiderstand in der Lippe.

Die begriffliche Unterscheidung zwischen Lippe und Verbindungsabschnitt zwingt nicht dazu, daß Lippe und Verbindungsabschnitt ihre charakteristische Steifheit bzw. Biegbarkeit über ihre jeweils gesamte Länge aufweisen; vielmehr können die Übergänge fließend sein. So ist beispielsweise nicht ausgeschlossen, daß der dem Verbindungsabschnitt nächste Bereich der Lippe auch noch dünn wie der Verbindungsabschnitt ausgeführt ist. Jedoch soll der Bereich geringeren Biegewiderstands nur einen kleinen Teil der axialen Lippenerstreckung fern vom Dichtbereich, vorzugsweise nicht mehr als 20% der gesamten axialen Lippenerstreckung, einnehmen. Bevorzugt wird eine Ausführung, bei welcher der Bereich geringeren Biegewiderstands praktisch gänzlich außerhalb des eine axiale Erstreckungskomponente besitzenden Abschnitts der Lippe liegt.

Die Erfindung wirkt sich um so stärker auf das Dichtverhalten der Lippe aus, je steiler diese sich auf die Gegendichtfläche aufsetzt. Erfindungsgemäß soll deshalb der Lippenwinkel zur Gegendichtfläche zwischen 30° und 60° liegen, wobei dieser Winkel auf die Verbindungslinie zwischen der Lippenwurzel und der Dichtzone der Lippe (Bereich ihrer Anlage an der Gegendichtfläche) bezogen ist.

Ferner ist es nach der Erfindung zweckmäßig, die axiale Lippenerstreckung so gering wie möglich zu halten; denn auch dadurch kann die bei der Dichtzone der Lippe sich ergebende Verformung reduziert werden. Zweckmäßigerweise ist die axiale Lippenerstreckung, nämlich die axiale Distanz zwischen dem radial verlaufenden Übergangsabschnitt und der Dichtzone der Lippe, nicht größer als 3mm. Nach einer anderen Bemessungsregel soll sie nicht größer sein als die dreifache mittlere Dicke der Lippe.

Die Erfindung wird im folgenden näher unter Bezugnahme auf die Zeichnung, die vorteilhafte Ausführungsbeispiele der Erfindung veranschaulicht, erläutert. Darin zeigen:
- Fig. 1: eine erste Ausführungsform und
- Fig. 2: eine zweite Ausführungsform, beide im Meridialschnitt

Die Welle 1 wird umgeben von dem Wellendichtring, der sich aus einem ringförmigen Haltekörper 2 beispielsweise aus Metall und einem PTFE-Teil 3 zusammensetzt, wobei der letztere auch die Lippe 4 und den die Lippe mit dem Haltekörper verbindenden Verbindungsabschnitt 5 bildet, die im Anspruch gemeinsam als Dichtteil bezeichnet werden. Diese Lippe 4 liegt mit der Dichtzone 6, die mit dem vorbestimmten Anlagewinkel an der Lippe vorgeformt ist, über eine axiale Länge von vorzugsweise 0,3-0,7mm an der von der Welle gebildeten Gegendichtfläche an. Der Haltekörper ist in einem nicht gezeigten Gehäuse montiert.

Bei der Herstellung des Rings werden die Lippe 4 und der Verbindungsabschnitt 5 vorzugsweise in etwa radialer Richtung geformt und dann in der dargestellten Weise gebogen. Diese Biegung wird dadurch begünstigt, daß der Verbindungsabschnitt 5 biegeweich ausgeführt ist, während die sich von dort zur Dichtzone 6 erstreckende Lippe 4 biegesteif ausgebildet ist. Die Längen- und Dickenverhältnisse sind-so gewählt, daß sich dabei ein Winkel α, mit dem sich die Lippe auf die Gegendichtfläche aufsetzt, von 30-60°, vorzugsweise 40-60°, im dargestellten Beispiel etwa 45° einstellt. Dieser Winkel wird gemessen von der Mitte der Dichtzone 6 bis zu dem gedachten Punkt 9, in welchem sich die Verbindung zwischen der Lippe 4 und dem Verbindungsbereich gelenkartig konzentriert denken läßt. Da der Widerstand gegen die Biegung der Lippe nicht nur von ihrer Dicke, sondern auch von ihrer Umfangsaufweitung herrührt, befindet sich dieser gedachte Gelenkpunkt nicht in der Mitte des Verbindungsabschnitts 5, sondern nahe bei der Lippenwurzel, etwa bei dem Punkt 9. Die radiale Länge 10 des Verbindungsabschnitts beträgt dabei etwa 50-60% der in Axialrichtung verlaufenden Komponente 11 der Länge der Lippe.

Die Lippe 4 erreicht etwa die doppelte Dicke des Verbindungsabschnitts 5, wobei ihre Dicke von der Grenze zum Verbindungsabschnitt bis etwa zur Mitte ihrer Längserstreckung kontinuierlich zunimmt. Ihre mittlere Dicke ist etwa 1,8-mal so groß wie die des Verbindungsabschnitts; ihr Biegewiderstand ist daher im Mittel mindestens gut 3-mal so groß.

Die axiale Länge 11 der Lippe 4 ist etwa 1,8-mal so groß wie ihre mittlere Dicke. Sie sollte nicht größer als 3-mal, vorzugsweise nicht größer als 2-mal ihre mittlere Dicke sein. Je geringer die axiale Länge dieses Abschnitts ist, um so geringer ist nämlich die von dem abzudichtenden Differenzdruck darauf ausgeübte Biegekraft sowie die am freien Ende der Lippe zu erwartende Veränderung des Winkels α.

Es hat sich gezeigt, daß die erfindungsgemäße Dichtung im Druckbereich weniger bar bis hinauf zu etwa 25 bar wesentlich beständiger ist als entsprechende bekannte Bauformen.

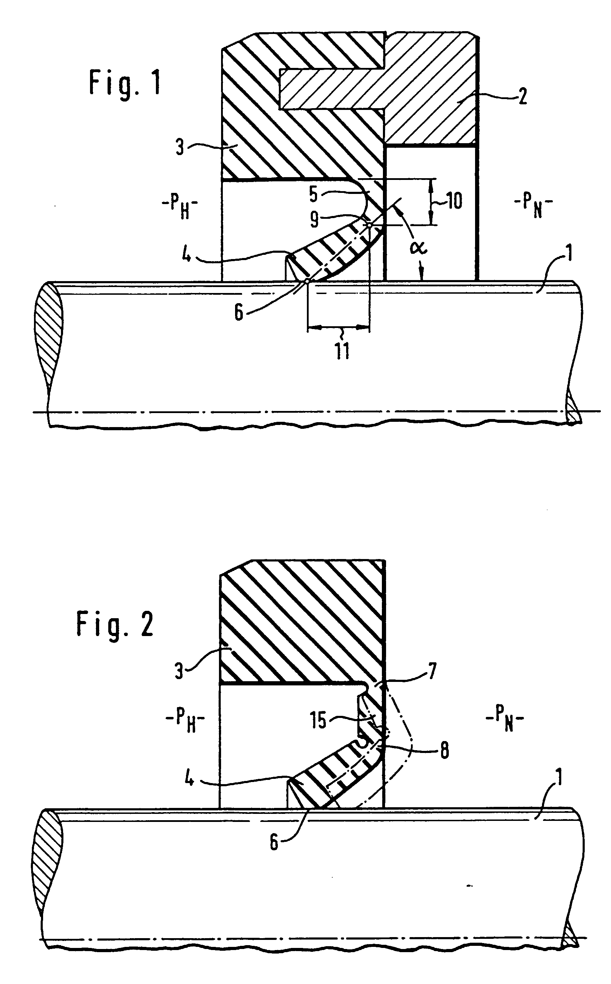

Das Ausführungsbeispiel gemäß Fig. 2 unterscheidet sich von demjenigen gemäß Fig. 1 dadurch, daß der Verbindungsabschnitt 15 nicht in seiner Gesamtheit biegeweich ausgebildet ist, sondern an seinem oberen Ende, wo er mit dem Halteteil 3 verbunden ist, und an seinem unteren Ende, wo er in die Lippe 4 übergeht, Biegegelenke 7, 8 aufweist, die durch entsprechende Materialverdünnung an diesen Stellen gebildet sind.

An dieser Ausführung läßt sich die Funktion der erfindungsgemäßen Merkmale folgendermaßen beschreiben. Wenn auf den Dichtring eine Druckdifferenz von der Seite des höheren Drucks P_{H} zu der Seite des niedrigen Drucks P_{N} wirkt, verformt sich der Dichtring aus der mit durchgezogenen Linien gezeigten Ursprungs lage in die strichpunktiert dargestellte Verformungslage. Während der Verformung bewegt sich das Biegegelenk 8 etwa auf einer Kreisbahn um das Biegegelenk 7, wobei sein Abstand von der Gegendichtfläche der Welle 1 ein wenig zunimmt. Die Lippe 4 wird also an ihrem Ende, an dem sie mit dem Verbindungsabschnitt verbunden ist, von der Gegendichtfläche weg bewegt. Diese Verformung wirkt sich entlastend auf ihre Dichtzone 6 aus. Auch wird der Biegung der Lippe entgegengewirkt. Somit wirken die Biegung des Verbindungsabschnitts 15 und die Biegung der Lippe 4 gegensinnig auf den Winkel, mit welchem das freie Ende der Lippe 4 sich auf die Welle 1 aufsetzt. Diese gegensinnigen Einflüsse können durch entsprechende Bemessung der Lippe und des Verbindungsabschnitts so gesteuert werden, daß die geometrischen Verhältnisse, unter denen die Dichtzone 6 der Lippe an der Gegendichtfläche anliegt, etwa konstant bleiben.

Durch Versuch läßt sich leicht ermitteln, welche Länge der Lippe 4 und des Verbindungsabschnitts 5 und welche Materialdicken für einen gegebenen Druck und ein gegebenes Material zu den gewünschten Ergebnissen führen.

## Patentansprüche

1. Wellendichtring, der einen ringförmigen Haltekörper (3) und einen ringförmigen Dichtteil umfaßt, der sich zusammensetzt aus einer sich entgegen der abzudichtenden Druckdifferenz zur Wellenoberfläche (1) erstreckenden Dichtlippe (4) und einem etwa radial sich erstreckenden, die Dichtlippe mit dem Haltekörper verbindenden Verbindungsabschnitt (5, 15), der nicht steifer als die Dichtlippe (4) ist,
- wobei die Dichtlippe (4) mit der Wellenoberfläche (1) einen spitzen Winkel einschließt und unter der abzudichtenden Druckdifferenz eine Biegung erleidet, die zu einer Verringerung des genannten Winkels tendiert,
- und wobei der Verbindungsabschnitt (5, 15) unter der abzudichtenden Druckdifferenz eine axiale Verformung in Richtung zur Niederdruckseite (P_{N}) hin erleidet,
- dadurch gekennzeichnet, daß der Verbindungsabschnitt (5, 15) weniger biegesteif als die Dichtlippe (4) ist, so daß zumindest ein Teil (8) des Verbindungsabschnitts (5, 15), der der Wellenoberfläche (1) näher liegt als ein anderer Teil (7) des Verbindungsabschnitts (5, 15), unter einer abzudichtenden Druckdifferenz weiter zur Niederdruckseite (P_{N}) hin verformt ist als der andere Teil (7) des Verbindungsabschnitts,
- wobei das der Wellenoberfläche (1) fernere Ende der Dichtlippe (4) unter der abzudichtenden Druckdifferenz von der Wellenoberfläche (1) weiter entfernt ist als im druckdifferenzfreien Zustand, wodurch die von der Biegung der Dichtlippe (4) herrührende Verringerung des genannten Winkels zumindest teilweise kompensiert wird.

2. Wellendichtring nach Anspruch 1, dadurch gekennzeichnet, daß die Länge (10) des Verbindungsabschnitts (5, 15) mindestens 40 % der axialen Lippenerstreckung (11) beträgt.

3. Wellendichtring nach Anspruch 1 oder 2, dadurch gekennzeichnet, daß die Lippe (4) aus steifelastischem Werkstoff besteht.

4. Wellendichtring nach einem der Ansprüche 1 bis 3, dadurch gekennzeichnet, daß die Lippe (4) aus einem Werkstoff besteht, der der Gefahr kalten Flusses unterliegt.

5. Wellendichtring nach Anspruch 1, dadurch gekennzeichnet, daß der Verbindungsabschnitt (5, 15) wenigstens ein Biegegelenk (7, 8) bildet oder enthält.

6. Wellendichtring nach einem der Ansprüche 1 bis 5, dadurch gekennzeichnet, daß der Biegewiderstand im Verbindungsabschnitt (5, 15) höchstens halb so groß ist wie der mittlere Biegewiderstand der Lippe (4).

7. Wellendichtring nach einem der Ansprüche 1 bis 6, dadurch gekennzeichnet, daß die Lippe (4) sich unter einen Winkel α von 30° bis 60° zur Gegendichtfläche (1) erstreckt.

8. Wellendichtring nach einem der Ansprüche 1 bis 7, dadurch gekennzeichnet, daß die axiale Lippenerstreckung nicht größer ist als 3mm.

9. Wellendichtring nach einem der Ansprüche 1 bis 8, dadurch gekennzeichnet, daß die axiale Lippenerstreckung nicht größer ist als die dreifache mittlere Dicke der Lippe (4).

## Claims

1. A shaft sealing ring which comprises an annular retaining member (3) and an annular sealing part, which is made up of a sealing lip (4), which extends towards the shaft surface (1) counter to the pressure difference to be sealed, and of a substantially radially extending connecting portion (5,15) which connects the sealing lip (4) to the retaining member and which is not more rigid than the sealing lip (4),
- wherein the sealing lip (4) forms an acute angle with the shaft surface (1) and under the pressure difference to be sealed undergoes bending which tends to induce a decrease in said angle,
- and wherein the connecting portion undergoes an axial deformation in the direction of the low-pressure side (P_{N}) under the pressure difference to be sealed,
- characterised in that the connecting portion (5,15) is less rigid than the sealing lip (4) so that at least one part (8) of the connecting portion (5,15), which is disposed nearer to the shaft surface (1) than another part (7) of the connecting portion (5,15), is deformed under the pressure difference to be sealed further towards the low-pressure side (P_{N}) than the other part (7) of the connecting portion,
- wherein the end of the sealing lip (4) more remote from the shaft surface (1) is further removed from the shaft surface (1) under the pressure difference to be sealed than in the state without pressure difference, whereby the decrease in said angle induced by the bending of the sealing lip (4) is at least partly compensated.

2. A shaft sealing ring according to Claim 1, characterised in that the length (10) of the connecting portion (5,15) is at least 40 % of the axial lip extension (11).

3. A shaft sealing ring according to Claim 1 or 2, characterised in that the lip (4) consists of elastically stiff material.

4. A shaft sealing ring according to any one of Claims 1 to 3, characterised in that the lip (4) consists of a material which is subject to the danger of cold flow.

5. A shaft sealing ring according to Claim 1, characterised in that the connecting portion (5,15) forms or comprises at least one bending joint (7,8).

6. A shaft sealing ring according to any one of Claims 1 to 5, characterised in that the bending resistance in the connecting portion (5,15) is at maximum half as great as the average bending resistance of the lip (4).

7. A shaft sealing ring according to any one of Claims 1 to 6, characterised in that the lip (4) extends at an angle α of 30° to 60° to the counter sealing surface (1).

8. A shaft sealing ring according to any one of Claims 1 to 7, characterised in that the axial extension of the lip is not greater than 3 mm.

9. A shaft sealing ring according to any one of Claims 1 to 8, characterised in that the axial extension of the lip is not greater than three times the average thickness of the lip (4).

## Revendications

1. Bague d'étanchéité pour arbre, qui comprend un corps de support (3) de forme annulaire et une partie d'étanchéité de forme annulaire, qui se compose d'une lèvre d'étanchéité (4) s'étendant jusqu'à la surface (1) de l'arbre, en opposition à la différence de pression à l'égard de laquelle une étanchéité doit être réalisée, et d'une section de liaison (5, 15) s'étendant dans une direction sensiblement radiale et reliant la lèvre d'étanchéité au corps de support, cette section de liaison n'étant pas plus rigide que la lèvre d'étanchéité (4),
- dans laquelle la lèvre d'étanchéité (4) forme un angle aigu avec la surface (1) de l'arbre et, sous l'effet de la différence de pression à l'égard de laquelle une étanchéité doit être réalisée, subit une flexion, qui tend vers une diminution de l'angle cité,
- et dans laquelle la section de liaison (5, 15), sous l'effet de la différence de pression à l'égard de laquelle une étanchéité doit être réalisée, subit une déformation axiale en direction du côté basse pression (P_{N}),
- caractérisée en ce que la section de liaison (5, 15) est moins rigide en flexion que la lèvre d'étanchéité (4), de sorte qu'au moins une partie (8) de la section de liaison (5, 15), qui est située plus près de la surface (1) de l'arbre qu'une autre partie (7) de la section de liaison (5, 15), est davantage déformée encore vers le côté basse pression (P_{N}), sous l'effet d'une différence de pression à l'égard de laquelle une étanchéité doit être réalisée, que l'autre partie (7) de la section de liaison,
- l'extrémité de la lèvre d'étanchéité (4), qui est la plus éloignée de la surface (1) de l'arbre, étant davantage éloignée de la surface (1) de l'arbre, sous l'effet de la différence de pression à l'égard de laquelle une étanchéité doit être réalisée, que dans l'état d'absence de différence de pression, grâce à quoi la diminution de l'angle précité, provoquée par la flexion de la lèvre d'étanchéité (4), est compensée, au moins en partie.

2. Bague d'étanchéité pour arbre selon la revendication 1, caractérisée en ce que la longueur (10) de la section de liaison (5, 15) représente au moins 40% de la dimension axiale (11) de la lèvre.

3. Bague d'étanchéité pour arbre selon la revendication 1 ou 2, caractérisée en ce que la lèvre (4) est constituée d'une matière élastique présentant une certaine raideur.

4. Bague d'étanchéité pour arbre selon l'une des revendications 1 à 3, caractérisée en ce que la lèvre (4) est constituée d'une matière qui est exposée au risque d'un fluage à froid.

5. Bague d'étanchéité pour arbre selon la revendication 1, caractérisée en ce que la section de liaison (5, 15) forme ou contient au moins une articulation par flexion (7, 8).

6. Bague d'étanchéité pour arbre selon l'une des revendications 1 à 5, caractérisée en ce que la résistance à la flexion dans la section de liaison (5, 15) est au maximum égale à la moitié de la résistance moyenne à la flexio n de la lèvre (4).

7. Bague d'étanchéité pour arbre selon l'une des revendications 1 à 6, caractérisée en ce que la lèvre (4) s'étend sous un angle α de 30° à 60° par rapport à la contre-surface d'étanchéité (1).

8. Bague d'étanchéité pour arbre selon l'une des revendications 1 à 7, caractérisée en ce que la dimension axiale de la lèvre n'est pas supérieure à 3 mm.

9. Bague d'étanchéité pour arbre selon l'une des revendications 1 à 8, caractérisée en ce que la dimension axiale de la lèvre n'est pas supérieure au triple de l'épaisseur moyenne de la lèvre (4).
